# EUROPÄISCHE PATENTSCHRIFT

(11) **EP 4 225 014 B1**
(45) Veröffentlichungstag und Bekanntmachung des Hinweises auf die Patenterteilung: **01.04.2026**
(21) Anmeldenummer: 21787297.7
(22) Anmeldetag: 17.09.2021
(51) Int. Cl.: A01G 9/02

(54) **PFLANZUNGSVORRICHTUNG**
PLANTING APPARATUS
APPAREIL DE PLANTATION

(30) Priorität: 08.10.2020 AT 508632020
(43) Veröffentlichungstag der Anmeldung: 16.08.2023
(73) Patentinhaber: Metallbau Papst GmbH, 8600 Bruck/Mur (AT)
(72) Erfinder: PAPST, Gerald, 8600 Bruck an der Mur (AT)
(74) Vertreter: Wirnsberger & Lerchbaum Patentanwälte OG
(86) Internationale Anmeldenummer: PCT/AT2021/060334
(87) Internationale Veröffentlichungsnummer: WO 2022/073047

(56) Entgegenhaltungen:
- EP-A2- 1 287 734
- EP-B1- 2 702 863
- CN-A- 109 275 451
- CN-A- 110 622 727
- DE-A1- 19 728 001
- DE-U1- 20 005 091
- DE-U1- 20 013 915
- DE-U1- 202014 002 203
- DE-U1- 9 414 812
- GB-A- 2 248 176
- US-A1- 2011 016 784
- US-A1- 2018 110 188

## Beschreibung

Die Erfindung betrifft eine Pflanzungsvorrichtung, aufweisend ein Trägergestell sowie zumindest zwei Pflanzentröge, welche jeweils eine Vorderseite, einen Boden, eine Rückseite und Seitenflächen aufweisen und an unterschiedlichen Vertikalpositionen mit dem Trägergestell lösbar verbindbar sind.

Aus dem Stand der Technik sind verschiedene Pflanzungsvorrichtungen der eingangs genannten Art bekannt geworden, mit welchen Pflanzen übereinander angeordnet werden können, um beispielsweise einen auf einer Terrasse oder einem Balkon verfügbaren Raum bestmöglich auszunutzen.

Das Dokument GB2248176A beschreibt eine Pflanzungsvorrichtung, die ein Trägergestell sowie zumindest zwei Pflanzentröge gemäß dem Oberbegriff des Anspruchs 1 umfasst.

Es hat sich allerdings gezeigt, dass derartige Pflanzungsvorrichtungen einerseits nur mit großem Aufwand herstellbar und andererseits nicht sehr robust sind, sodass regelmäßige Reparaturen erforderlich sind.

Hier setzt die Erfindung an. Aufgabe der Erfindung ist es, eine Pflanzungsvorrichtung der eingangs genannten Art anzugeben, welche besonders langlebig und robust ist und gleichzeitig eine einfache Konstruktion aufweist.

Diese Aufgabe wird erfindungsgemäß durch eine Pflanzungsvorrichtung gemäß Anspruch 1 gelöst, bei welcher jeder Pflanzentrog ein mehrfach gekantetes Blech aufweist, welches die Vorderseite, den Boden und die Rückseite des Pflanzentroges bildet, wobei das Blech anschließend an die Rückseite ein Einhängeprofil bildet, welches als U-Profil, vorzugsweise durch zwei an die Rückseite anschließende Kantungen ausgebildet ist, wobei am Trägergestell zu jedem Pflanzentrog mit dem Einhängeprofil korrespondierende Einhängeeinrichtungen angeordnet sind, sodass die Pflanzentröge über die Einhängeprofile mit dem Trägergestell formschlüssig lösbar verbindbar sind, wobei am Trägergestell zu jedem Pflanzentrog zugeordnet jeweils unter der Einhängeeinrichtung ein Vorsprung vorgesehen ist, wobei ein Pflanzentrog derart am Trägergestell anordenbar ist, dass der Pflanzentrog über das U-Profil an der Einhängeeinrichtung eingehängt ist und eine Rückseite des Pflanzentroges an dem unter der Einhängeeinrichtung angeordneten Vorsprung anliegt.

Im Rahmen der Erfindung wurde erkannt, dass durch Einsatz einer entsprechenden Blechkonstruktion, wobei ein Blech einerseits die Vorderseite, den Boden und die Rückseite eines Pflanzentroges bildet und andererseits dieses Blech auch ein U-Profil bildet, über welches der jeweilige Pflanzentrog formschlüssig mit dem Trägergestell lösbar verbindbar ist, eine besonders robuste und gleichzeitig einfach herstellbare Konstruktion erreicht ist. Somit kann die entsprechende Pflanzungsvorrichtung ohne Weiteres für mehr als zehn Jahre eingesetzt werden, ohne dass Reparaturen erforderlich sind. Bei sachgemäßer Handhabung kann die erfindungsgemäße Vorrichtung auch mehrere Jahrzehnte verwendet werden. Das Blech kann beispielsweise als Edelstahlblech, als rostfreies Stahlblech, als beschichtetes Aluminiumblech, als verzinktes Blech oder auch als Kupferblech ausgebildet sein. Üblicherweise weist das Blech eine Stärke von 1 mm bis 5 mm, insbesondere 1,2 mm bis 2 mm auf.

Bevorzugt ist vorgesehen, dass das Trägergestell zwei Steher aufweist, an welchen die Einhängeeinrichtungen angeordnet sind, wobei Längsachsen der Steher bevorzugt etwa vertikal ausgerichtet sind. Die Einhängeeinrichtungen können beispielsweise einteilig mit dem Trägergestell bzw. den Stehern ausgebildet oder durch am Trägergestell bzw. an den Stehern angeordnete Elemente gebildet sein. Die Einhängeeinrichtungen weisen dabei in aller Regel einen Querschnitt auf, welcher innerhalb des U-Profils positioniert werden kann, sodass über das U-Profil und die Einhängeeinrichtung ein Aufhängen der Pflanzentröge am Trägergestell bzw. an den Stehern möglich ist. Bevorzugt sind die Steher horizontal voneinander derart beabstandet, dass die Pflanzentröge zwischen den Stehern angeordnet werden können. Dies gewährleistet einerseits ein stabiles Positionieren der Pflanzungsvorrichtung und ermöglicht andererseits ein einfaches Lösen bzw. Verbinden der einzelnen Pflanzentröge mit dem bzw. von dem Trägergestell.

Die Steher können grundsätzlich auf beliebige Weise ausgebildet sein. Eine besonders robuste und gleichzeitig einfache Konstruktion ergibt sich, wenn die Steher Profilrohre, insbesondere Vierkantprofilrohre, aufweisen oder aus solchen Profilrohren bestehen, wobei die Steher bevorzugt durch ein oder mehrere horizontal angeordnete Profilrohre verbunden sind. Die einzelnen Profilrohre können dabei miteinander verschweißt oder beispielsweise durch eine Schraubverbindung miteinander verbunden sein, sodass eine einfache und gleichzeitig robuste Konstruktion erreicht ist.

Alternativ oder ergänzend kann vorgesehen sein, dass die Steher U-Profile aufweisen oder durch U-Profile gebildet werden, wobei bevorzugt ein erstes U-Profil über ein zweites U-Profil gestülpt ist. Wenn ein erstes U-Profil, welches als Stangenware verfügbar und daher kostengünstig ist, über ein zweites U-Profil gestülpt ist, ergibt sich im Wesentlichen ein Vierkantprofilrohr, wobei jedoch dabei auch einfach Einrichtungen in ein Inneres des Stehers eingebaut werden können, beispielsweise eine Bewässerungseinrichtung. Hierzu kann einfach eines der U-Profile vom zweiten U-Profil gelöst werden, um zu einem Inneren der durch die beiden U-Profile gebildeten Vierkantprofilrohre zu gelangen.

Zur Erreichung einer besonders robusten und gleichzeitig einfach herstellbaren Konstruktion ist es günstig, wenn zumindest eine Einhängeeinrichtung durch ein Vierkantprofil, insbesondere eine Vierkantstange, gebildet ist, wobei die Einhängeeinrichtung mit dem Trägergestell durch eine Schraub- und/oder Schweißverbindung verbunden ist.

Die Einhängeeinrichtung kann dabei in einer einfachen Ausführung mit einem Durchgangsloch versehen sein, sodass diese durch von außen sichtbare Schrauben und Muttern mit dem Steher bzw. dem Trägergestell verbindbar ist, wobei der Steher bzw. das Trägergestell ebenfalls ein entsprechendes Durchgangsloch, gegebenenfalls mit Gewinde, aufweisen kann.

Alternativ kann auch vorgesehen sein, dass in der Einhängeeinrichtung, welche beispielsweise durch ein Stück einer Vierkantstange aus Metall gebildet sein kann, bevorzugt aus demselben Metall, aus welchem auch die Bleche der Pflanzentröge gebildet sind, ein Gewinde geschnitten ist. Eine Schraube kann dann durch ein Durchgangsloch im Steher in die Einhängeeinrichtung ragen, um die Einhängeeinrichtung mit dem Steher zu verbinden, wobei die Schraube von außerhalb des Stehers nicht sichtbar ist. Dies ist insbesondere dann auf einfache Weise möglich, wenn jeder Steher durch zwei U-Profile gebildet ist, wobei ein U-Profil über das andere U-Profil gestülpt ist. In diesem Fall ist der Schraubenkopf erst ersichtlich, wenn die U-Profile voneinander gelöst werden.

Es hat sich bewährt, dass eine Bewässerungseinrichtung vorgesehen ist, durch welche die einzelnen Pflanzentröge mit Wasser versorgbar sind. Diese Bewässerungseinrichtung kann beispielsweise einen Schlauch aufweisen, welcher einerseits mit einer Wasserleitung verbindbar ist und über welchen andererseits Wasser von der Wasserleitung zu den einzelnen Pflanzentrögen befördert wird. Dabei kann auch vorgesehen sein, dass nur ein oberster Trog mit der Bewässerungseinrichtung bewässert wird und ein Ablauf des obersten Troges derart mit einem darunter angeordneten Trog verbunden ist, dass jeweils Wasser vom obersten Trog bis zu einem untersten Trog transportierbar ist, um sämtliche in den vertikal übereinander angeordneten Trögen befindlichen Pflanzen zu bewässern. Bevorzugt ist jedoch vorgesehen, dass die Zuleitung oberhalb von jedem einzelnen Pflanzentrog einen Auslass aufweist, durch welchen jeder Pflanzentrog unmittelbar über die Zuleitung bewässert werden kann.

Eine optisch besonders ansprechende Konstruktion ergibt sich, wenn eine Zuleitung, über welche Wasser den einzelnen Pflanzentrögen zuführbar ist, im Trägergestell, insbesondere in Stehern des Trägergestelles angeordnet ist, zumal diese dann von außen nicht ersichtlich ist.

Eine besonders komfortable Pflanzungsvorrichtung ergibt sich, wenn eine mit einer Wasserleitung verbindbare Zuleitung und eine Zeitschaltuhr vorgesehen sind, sodass die Pflanzentröge automatisiert bewässerbar sind.

Bevorzugt ist vorgesehen, dass ein Überlauf eines Pflanzentroges zu einem darunter angeordneten Pflanzentrog führt, sodass eine Bewässerung eines obersten Pflanzentroges über einen Überlauf der einzelnen Pflanzentröge zu einer Bewässerung sämtlicher Pflanzentröge führt.

Günstig ist es, wenn zur Aufnahme von aus den Pflanzentrögen austretende Flüssigkeit unter einem untersten Pflanzentrog eine Tasse vorgesehen ist, welche bevorzugt aus einem Blech, insbesondere aus einem aus einem rostfreien Stahl bestehenden Blech, gebildet ist. Diese Tasse hat bevorzugt eine mit einem Boden des Pflanzentroges korrespondierende Größe und ist üblicherweise lösbar mit dem Trägergestell verbindbar, sodass diese auf einfache Weise entnommen und geleert bzw. gereinigt werden kann. Die Tasse kann beispielsweise auch aus einem anderen Material bestehen, insbesondere Aluminium, beispielsweise aus einem beschichteten Aluminiumblech. Eine Oberfläche der Tasse kann beispielsweise geschliffen, insbesondere rostfrei geschliffen, oder gebürstet, insbesondere rostfrei gebürstet, sein. Bei Einsatz eines rostfreien Materials kann gänzlich auf eine Lackierung vermieden werden, wodurch ein durch die Lackierung bedingtes Einbringen von möglicherweise gesundheitsschädlichen Chemikalien vermieden wird, wenngleich ein Lackieren natürlich grundsätzlich möglich ist.

Es hat sich bewährt, dass bodenseitig am Trägergestell eine Wanne vorgesehen ist, welche vorzugsweise eine einer Grundfläche der Pflanzungsvorrichtung entsprechende Größe aufweist. Dadurch wird insbesondere bei einer Verwendung der Pflanzungsvorrichtung in Innenräumen verhindert, dass von den einzelnen Pflanzentrögen herabfallende Gegenstände, beispielsweise Blätter oder dergleichen, einen Boden verunreinigen, zumal diese durch die bodenseitige Wanne aufgefangen werden können. Die Wanne kann zwischen Profilrohren angeordnet sein, welche das Trägergestell bilden. Beispielsweise kann hierzu vorgesehen sein, dass die Wanne eine Höhe von etwa 2 cm aufweist und bündig zwischen Trägerrohren des Trägergestelles angeordnet ist.

Erfindungsgemäß ist am Trägergestell zu jedem Pflanzentrog ein Vorsprung zugeordnet der jeweils unter der Einhängeeinrichtung vorgesehen ist, wobei ein Pflanzentrog derart am Trägergestell anordenbar ist, dass der Pflanzentrog über das U-Profil an der Einhängeeinrichtung eingehängt werden kann und eine Rückseite des Pflanzentroges an dem unter der Einhängeeinrichtung angeordneten Vorsprung anliegt. Dadurch kann ein Pflanzentrog auch dann vertikal ausgerichtet am Trägergestell angeordnet werden, wenn die Aufhängung über das Einhängeprofil und die Einhängeeinrichtung außermittig bzw. nicht über einem Schwerpunkt der Pflanzungsvorrichtung erfolgt, zumal horizontale Kräfte dann über den Vorsprung aufgenommen werden können. Die Wanne ist bevorzugt aus rostfreiem Stahl, Edelstahl oder beschichtetem Aluminiumblech gebildet.

Besonders bevorzugt ist vorgesehen, dass am Trägergestell ein Dach angeordnet ist, welches die Pflanzentröge seitlich überragt. Dadurch können auch Pflanzen, welche nicht in direkter Sonneneinstrahlung angeordnet sein sollen oder welche vor Starkregen oder Hagel geschützt werden sollen, in der Pflanzungsvorrichtung gepflanzt werden, insbesondere auch in einem obersten Pflanzentrog.

Das Dach kann grundsätzlich aus einem beliebigen Material gebildet sein. Um eine optisch besonders ansprechende Pflanzungsvorrichtung zu erreichen, ist bevorzugt vorgesehen, dass das Dach ein Glas, insbesondere ein Sicherheitsglas, aufweist oder aus einem solchen Glas besteht. Das Glas kann beispielsweise an Stehern des Trägergestelles befestigt werden, um eine gleichzeitig einfache und robuste Konstruktion zu gewährleisten. Das Dach kann auch nur teiltransparent oder intransparent ausgebildet sein, beispielsweise durch ein mit einer Folie beklebtes Glas, insbesondere eine Glasscheibe, welche mit einer mattweißen Folie beklebt ist oder eine solche Folie zwischen Glasscheiben aufweist.

Um ein Abfließen von Wasser vom Dach auf einfache und gleichzeitig optisch ansprechende Weise zu gewährleisten, ist bevorzugt vorgesehen, dass das Dach geneigt angeordnet ist, insbesondere unter einem Winkel zu einer Horizontalen von 2 Grad bis 30 Grad, vorzugsweise 5 Grad bis 15 Grad.

Es hat sich bewährt, dass zumindest an einem Pflanzentrog an der Vorderseite, dem Boden und/oder der Rückseite innenseitig eine Korkmatte angeordnet ist, wobei die Korkmatte bevorzugt eine Dicke von 1 mm bis 15 mm, vorzugsweise 2 mm bis 5 mm, aufweist. Dies gewährleistet insbesondere einen Wärmeschutz, welcher vorteilhaft ist, zumal sich die durch ein Blech gebildeten Pflanzentröge bei Sonneneinstrahlung leicht aufheizen können und hohe Temperaturen für in den Pflanzentrögen befindliche Pflanzen ungünstig sein könnten. Bei Einsatz entsprechender Korkmatten, welche besonders bevorzugt an allen Pflanzentrögen angeordnet sind und sich zudem auch an sämtlichen Innenflächen der Pflanzentröge befinden können, ist darüber hinaus eine biologisch vorteilhafte Wärmedämmung gegeben, welche aufgrund der gleichmäßigen Temperaturen zu einem besonders guten Pflanzenwachstum führt.

Bevorzugt ist vorgesehen, dass zumindest ein Pflanzentrog Seitenwände aufweist, welche den Pflanzentrog seitlich abschließen, wobei die Pflanzenwände bevorzugt aus einem dem Blech, aus welchem die Rückseite, der Boden und die Vorderseite bestehen, entsprechenden Blech gebildet und mit dem der Rückseite, der Vorderseite und dem Boden verschweißt sind. Dies gewährleistet einerseits eine robuste Konstruktion, welche langlebig ist. Darüber hinaus wird durch eine entsprechende Blechkonstruktion eine günstige Temperaturverteilung in einem Inneren des Pflanzentroges erreicht, wodurch ein vorteilhaftes Pflanzenwachstum gewährleistet ist. Üblicherweise sind sämtliche Pflanzentröge einer Pflanzungseinrichtung entsprechend ausgebildet.

Günstig ist es, wenn innen an zumindest einem Pflanzentrog bodenseitig ein Lochblech vorgesehen ist, auf welchem ein Vlies angeordnet ist. Es bildet sich dann zwischen dem Lochblech und dem Boden des Pflanzentroges ein Raum, in welchem Wasser frei zirkulieren kann, sodass von einem Erdreich im Pflanzentrog abgegebenes Wasser in diesem Bereich gesammelt werden kann. Dieser Bereich kann auch mit einer Öffnung versehen sein, um Flüssigkeit aus dem Pflanzentrog austragen zu können.

Es hat sich bewährt, dass zumindest ein Pflanzentrog einen zu einem vorderen Ende zulaufenden Querschnitt aufweist. Dies gewährleistet bei günstiger Gewichtsverteilung eine große Fläche, welche für die Pflanzenzucht verwendet werden kann. In der Regel weist ein Pflanzentrog einen Boden und einen zum Boden parallele Oberseite auf, wobei die Rückseite bevorzugt etwa normal zu Boden und Oberseite angeordnet und die Oberseite im Wesentlichen offen ausgebildet ist. Der Boden weist dabei üblicherweise eine geringere Erstreckung in einer Richtung normal zur Rückseite als die Oberseite auf, sodass sich ein zu einem vorderen Ende zulaufender Querschnitt ergibt, wobei das vordere Ende gegenüber von der Rückseite positioniert ist. Die Vorderseite des Pflanzentroges steht somit üblicherweise unter einem Winkel von mehr als 90 Grad zum Boden. Als Rückseite des Pflanzentroges wird dabei in der Regel jene Seite bezeichnet, welche am Trägergestell anliegt und als Vorderseite eine gegenüberliegende Seite des Pflanzentroges.

Um im Pflanzentrog befindliches Wasser zuverlässig austragen und gleichzeitig unter dem Pflanzentrog befindliche weitere Pflanzentröge entsprechend bewässern zu können, ist bevorzugt vorgesehen, dass zumindest ein Pflanzentrog im Boden eine Öffnung aufweist, durch welche Wasser aus dem Pflanzentrog austreten kann, wobei bevorzugt in der Öffnung ein Schlauch und/oder eine Kunststoffhülse positioniert ist. Dadurch kann bodenseitig im Pflanzentrog gesammelte Flüssigkeit über die Öffnung und den Schlauch bzw. die Kunststoffhülse kontrolliert aus dem Pflanzentrog austreten, sodass beispielsweise ein kontinuierliches Tropfen in einem darunter angeordneten Pflanzentrog ermöglicht ist.

Um eine Verschmutzung einer Gebäudewand oder dergleichen, an welcher die Pflanzungsvorrichtung angeordnet werden kann, auf einfache Weise zu vermeiden, kann vorgesehen sein, dass an einer Rückseite eine Wand vorgesehen ist, insbesondere eine durch eine Glasscheibe gebildete Wand. Die Wand deckt üblicherweise einen Querschnitt der Pflanzungsvorrichtung in einer Seitenansicht gänzlich ab. Somit ist die Gebäudewand auf einfache Weise geschützt. Die Wand kann natürlich alternativ zu einer Glasscheibe auch durch eine Fassadenplatte, ein beschichtetes Aluminiumblech oder dergleichen gebildet sein.

Mit der Pflanzungsvorrichtung können einerseits Pflanzentröge übereinander angeordnet werden. Darüber hinaus kann die Pflanzungsvorrichtung auch derart ausgebildet sein, dass Pflanzentröge nicht nur übereinander, sondern auch nebeneinander angeordnet sind, sodass sich beispielsweise zwei Reihen bzw. Säulen von Pflanzentrögen ergeben. Hierzu ist bevorzugt vorgesehen, dass das Trägergerüst zur Aufnahme von zumindest zwei Pflanzentrögen auf derselben Vertikalposition ausgebildet ist, vorzugsweise zur Aufnahme von an einer Vorderseite und einer Rückseite angeordneten und vertikal beabstandeten Pflanzentrögen. Beispielsweise können drei, vier, fünf oder sechs Pflanzentröge übereinander und jeweils Rückwand an Rückwand zwei Pflanzentröge auf einer Vertikalposition vorgesehen sein, sodass die Pflanzungsvorrichtung mit drei bis zwölf Pflanzentrögen ausgebildet sein kann. Es versteht sich, dass auch mehr als zwölf oder weniger als drei Pflanzentröge vorgesehen sein können.

In einer besonders einfachen und bevorzugten Ausführungsform können hierzu am Trägergestell bzw. insbesondere an Stehern des Trägergestelles, zwei nebeneinander angeordnete Einhängeeinrichtungen angeordnet sein, sodass jeweils an einer Vertikalposition, also mit gleichem Abstand zu einem Boden, zwei Pflanzentröge Rückseite an Rückseite, gegebenenfalls mit Abstand zwischen den Rückseiten, an den Einhängeeinrichtungen eingehängt werden können.

Günstig ist es, wenn das Trägergestell verstellbare Fußteile aufweist, um Unebenheiten eines Bodens ausgleichen zu können. Die Pflanzentröge können dann auch auf unebenem bzw. schiefem Untergrund auf einfache Weise horizontal ausgerichtet werden.

Besonders bevorzug ist vorgesehen, dass das Trägergestell und/oder die Pflanzentröge im Wesentlichen aus Edelstahl bestehen. Alternativ kann auch vorgesehen sein, dass das Trägergestell und/oder die Pflanzentröge aus verzinktem Stahl, aus verzinktem und beschichtetem Stahl, aus unbehandeltem Aluminium oder beschichtetem Aluminium bestehen.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 bis Fig. 3 verschiedene Ausführungsbeispiele einer erfindungsgemäßen Pflanzungsvorrichtung;
Fig. 4 bis Fig. 21 Details von erfindungsgemäßen Pflanzungsvorrichtungen.

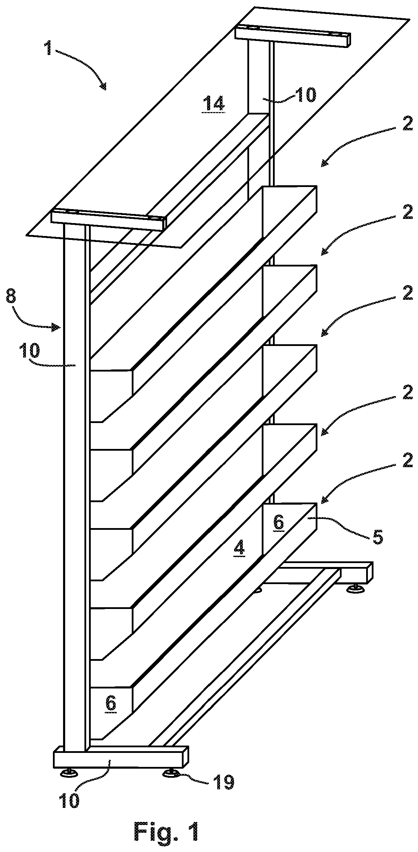

Fig. 1 zeigt ein erstes Ausführungsbeispiel einer erfindungsgemäßen Pflanzungsvorrichtung 1, welche fünf Pflanzentröge 2 aufweist. Die Pflanzentröge 2 sind an vertikalen Stehern 8 eines Trägergestelles an unterschiedlichen Vertikalpositionen und übereinander angeordnet.

Das Trägergestell besteht dabei im Wesentlichen aus Vierkantprofilrohren 10, welche untereinander verschraubt oder verschweißt sein können. An einem oberen Ende des Trägergestelles ist ein Dach 14 angeordnet, welches im dargestellten Ausführungsbeispiel durch eine Glasscheibe gebildet ist. Die einzelnen Pflanzentröge 2 weisen ein Blech 25 auf, welches eine Rückseite 4, einen Boden 3 und eine Vorderseite 5 der einzelnen Pflanzentröge 2 sowie ein Einhängeprofil 7 bildet, mit welchem Einhängeprofil 7 die einzelnen Pflanzentröge 2 über am Trägergestell angeordnete Einhängeeinrichtungen 12 mit dem Trägergestell verbunden sind. Die Einhängeeinrichtungen 12 weisen dabei ein mit dem Einhängeprofil 7 korrespondierendes Profil auf, sodass sich eine formschlüssige und lösbare Verbindung ergibt.

Seitenflächen 6 der Pflanzentröge 2 sind ebenfalls durch Blech 25 gebildet, welche Bleche 25 mit dem Blech 25, welches den Boden 3, die Rückseite 4 und die Vorderseite 5 sowie das Einhängeprofil 7 bildet, verschweißt sind.

Wie dargestellt sind die Pflanzentröge 2 mit einem zu einem vorderen Ende hin, also mit zunehmendem Abstand von einem Steher 8 des Trägergestelles, abnehmenden Querschnitt ausgebildet, wodurch sich eine einem Dreieck ähnliche Form ergibt. Dies hat sich besonders bewährt, um einerseits ein optisch ansprechendes Erscheinungsbild zu erreichen und andererseits ein möglichst großes Volumen für Pflanzen zu gewährleisten.

Bodenseitig weist das Trägergestell hier verstellbare Fußteile 19 auf, welche beispielsweise durch eine Schraube 24 justiert werden können, um das Trägergestell an unterschiedliche Bodengegebenheiten, beispielsweise einen unebenen und/oder einen schrägen Untergrund anpassen zu können.

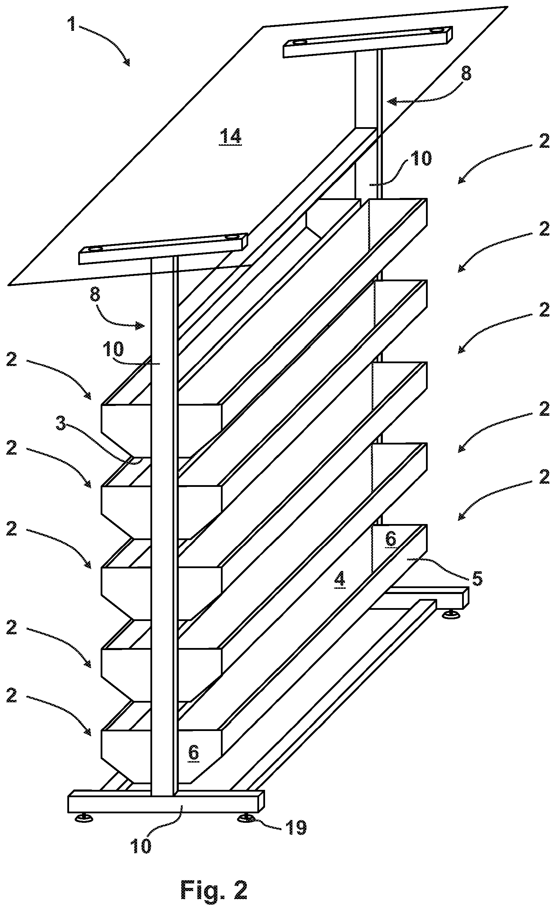

Die in Fig. 1 dargestellte Pflanzungsvorrichtung 1 ist wie die in Fig. 2 dargestellte Pflanzungsvorrichtung 1 mit Pflanzentrögen 2 für Mittelwurzler ausgebildet, welche eine entsprechende Tiefe aufweisen.

Fig. 2 zeigt eine der in Fig. 1 dargestellten Pflanzungsvorrichtung 1 im Wesentlichen entsprechende Pflanzungsvorrichtung 1, wobei jedoch auf einer Vertikalposition am Trägergestell bzw. an den vertikalen Stehern 8 jeweils zwei Pflanzentröge 2 befestigbar sind. Hierzu sind jeweils zwei Einhängeeinrichtungen 12 an einer Vertikalposition nebeneinander angeordnet, sodass die Pflanzentröge 2 Rückseite 4 an Rückseite 4 aneinander positioniert werden können. Dadurch kann die Pflanzungsvorrichtung 1 für zehn Pflanzentröge 2 genutzt werden. Auch diese Pflanzungsvorrichtung 1 sowie die entsprechenden Pflanzentröge 2 sind wieder für Mittelwurzler ausgebildet.

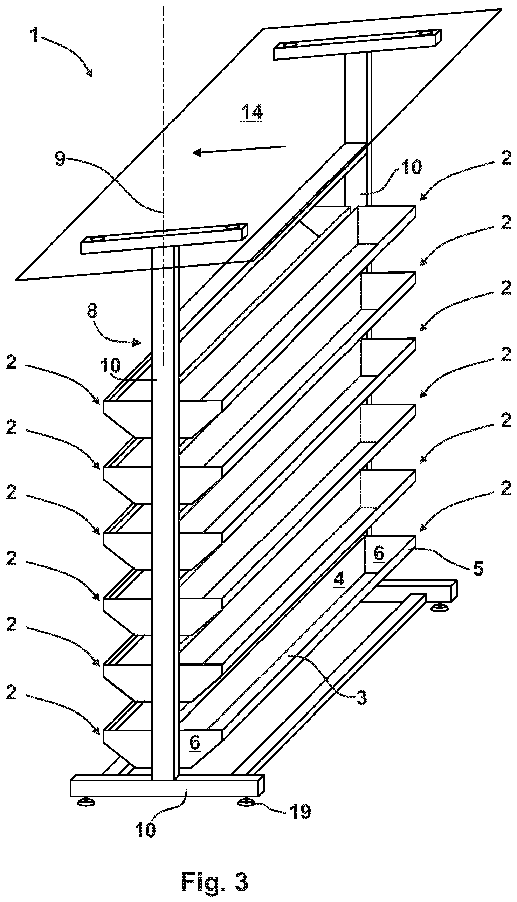

Im Unterschied dazu zeigt Fig. 3 eine entsprechende Pflanzungsvorrichtung 1, welche für Flachwurzler ausgebildet ist, weswegen die Pflanzentröge 2 eine geringere Höhe aufweisen. Entsprechend können bei einem etwa gleich hohen Trägergestell hier sechs Pflanzentröge 2 übereinander angeordnet werden, während bei den in Fig. 1 und Fig. 2 dargestellten Pflanzungsvorrichtungen 1 nur fünf Pflanzentröge 2 übereinander positioniert sind. Abgesehen davon ist die in Fig. 3 dargestellte Pflanzungsvorrichtung 1 konzeptionell ident mit den in Fig. 1 und Fig. 2 dargestellten Pflanzungsvorrichtungen 1.

Auch hier weist das Trägergestell seitliche, vertikal ausgerichtete Steher 8 auf, welche durch ein Profilrohr gebildet sind, und sind die Steher 8 durch weitere Profilrohre verbunden. Hier ist auch eine Längsachse 9 der Steher 8 bzw. der Profilrohre dargestellt, welche wie ersichtlich etwa vertikal ausgerichtet ist. Darüber hinaus ist auch hier an einem oberen Ende der Pflanzungsvorrichtung 1 ein Dach 14 bestehend aus einer Glasscheibe, gegebenenfalls einer Sicherheitsglasscheibe, angeordnet.

Die in Fig. 2 und 3 dargestellten Pflanzungsvorrichtungen 1 weisen wie dargestellt beidseits einer gedachten Mittelebene Pflanzentröge 2 auf, sodass diese bevorzugt an Orten eingesetzt werden, die von beiden Seiten zugänglich sind.

Die in Fig. 1 dargestellte Pflanzungsvorrichtung 1 eignet sich beispielsweise dazu, um an eine Hauswand oder dergleichen gestellt zu werden, wobei nur eine einseitige Zugänglichkeit gegeben ist. Um zu verhindern, dass beispielsweise bei einem Gießen der Pflanzen eine Hauswand verunreinigt wird, kann rückseitig an dieser Pflanzungsvorrichtung 1 eine Wand 15, beispielsweise eine Glaswand, vorgesehen sein. Alternativ zu einer Glaswand oder Glasscheibe kann die Wand natürlich auch durch ein anderes Material gebildet sein. Beispielsweise kann die Wand 15 eine oder mehrere Fassadenplatten mit einer Stärke von 6 mm bis 12 mm und/oder beschichtete Aluminiumbleche aufweisen oder durch eine solche Fassadenplatte oder ein beschichtetes Aluminiumblech gebildet sein.

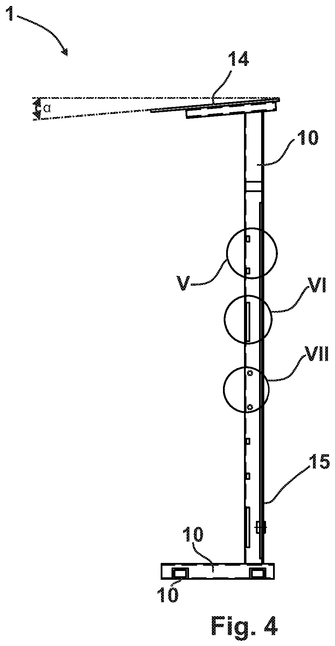

Fig. 4 zeigt beispielhaft einen Teil eines Trägergestelles einer erfindungsgemäßen Pflanzungsvorrichtung 1 in Seitenansicht, welche für eine Anordnung von fünf Pflanzentrögen 2 in einer einzigen Reihe übereinander, also für eine einseitige Zugänglichkeit, ausgebildet ist. Wie ersichtlich ist auch bei diesem Ausführungsbeispiel ein Dach 14 vorgesehen, welches unter einem Winkel α von etwa 5 Grad zu einer Horizontalen angeordnet ist.

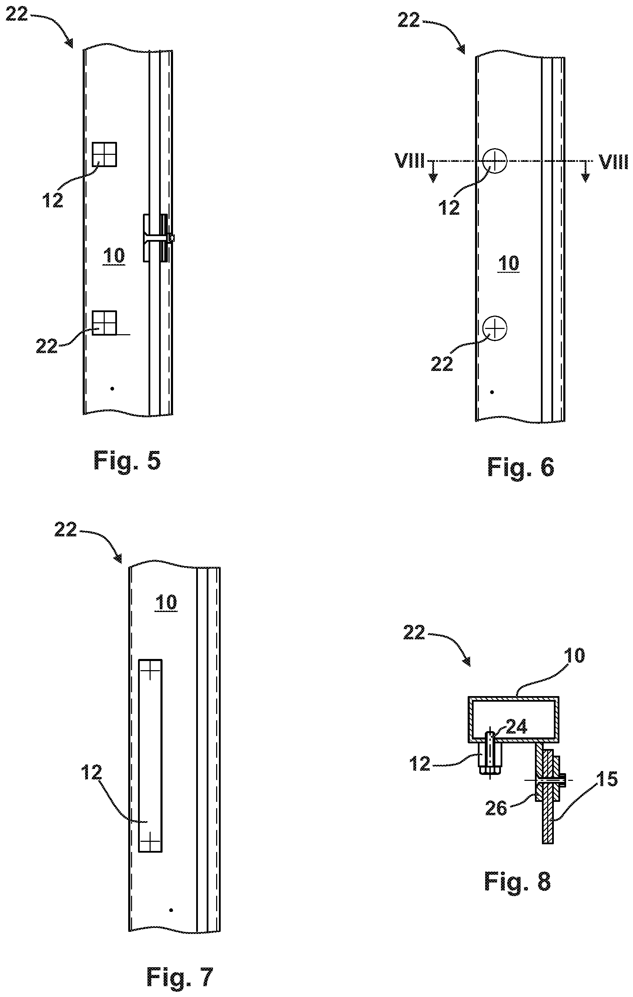

Fig. 5 zeigt das Detail V, Fig. 6 das Detail VI und Fig. 7 das Detail VII des in Fig. 4 dargestellten Trägergestelles.

Wie ersichtlich weist das Trägergestell mehrere übereinander angeordnete Einhängeeinrichtungen 12 auf, welche bei dem in Fig. 5 dargestellten Detail als Quadratstahl, bei dem in Fig. 6 dargestellten Detail als Rundstahl und bei dem in Fig. 7 dargestellten Detail samt einem unter der Einhängeeinrichtung 12 angeordneten Vorsprung 22 einteilig als Teil eines Quadratstahles ausgebildet sind. Die entsprechenden Einhängeeinrichtungen 12 korrespondieren mit einem Einhängeprofil 7 an den Pflanzentrögen 2, welches hier u-förmig bzw. als U-Profil ausgebildet ist.

An diesen Einhängeeinrichtungen 12 können die Pflanzentröge 2 somit mittels eines an eine Rückseite 4 anschließenden U-Profils 11, welches ebenfalls durch das Blech 25 gebildet wird, eingehängt werden. Die in Fig. 5 und Fig. 6 dargestellten Details weisen darüber hinaus unterhalb der Einhängeeinrichtung 12 gesonderte Vorsprünge 22 auf, welche jeweils gleich wie die Einhängeeinrichtungen 12 ausgebildet sind, also ebenfalls durch einen Rundstahl bzw. einen Quadratstahl.

Bei der in Fig. 7 dargestellten Ausführungsvariante bildet der längere Quadratstahl sowohl die Einhängeeinrichtung 12 als auch den Vorsprung 22, an welchem der Pflanzentrog 2 anliegen kann, um eine sich aus der außermittigen Aufhängung ergebende Horizontalkraft abzustützen.

Die Einhängeeinrichtung 12 kann auch mit bzw. durch Formrohre, Rundrohre, Winkelstähle oder gekantete Bleche gebildet sein.

In den dargestellten Ausführungsbeispielen sind die Einhängeeinrichtungen 12 jeweils vergleichsweise kurz ausgebildet und ragen nur wenige Millimeter oder Zentimeter vom Steher 8 nach innen. Es versteht sich, dass die Einhängeeinrichtungen 12 grundsätzlich auch länger ausgebildet sein können. So kann vorgesehen sein, dass eine oder mehrere Einhängeeinrichtungen 12 die beiden Steher 8 verbinden, sich also durchgehend über eine Länge der Pflanzungsvorrichtung 1 erstrecken, wodurch auch eine erhöhte Stabilität erreicht wird.

Fig. 8 zeigt eine Draufsicht auf das Trägergestell gemäß Fig. 4 entlang der Schnittlinie VIII-VIII in Fig. 6. Wie ersichtlich ist die Einhängeeinrichtung 12 mittels einer Schraube 24 in dem Steher 8 des Trägergestelles befestigt, welche Steher 8 durch ein Vierkantprofilrohr 10 gebildet ist. Hierzu ist in der Einhängeeinrichtung 12 ein Durchgangsloch und im Steher 8 ein Gewinde angeordnet, sodass die Einhängeeinrichtung 12 durch eine Schraube 24 mit dem Steher 8 und somit mit dem Trägergestell verbunden werden kann. Darüber hinaus ist hier auch eine Wand 15 teilweise ersichtlich, mit welcher eine Verunreinigung einer Hauswand, an welcher die Pflanzungsvorrichtung 1 angeordnet werden kann, verhindert werden kann. Wie dargestellt ist die Wand 15 über eine Lasche 26 mit dem Steher 8 verbunden, wobei die Wand 15 mit der Lasche 26 durch eine Schraube 24 lösbar verbunden ist, um diese bei Bedarf einfach tauschen zu können. Die Lasche 26 kann mit dem Steher 8 beispielsweise verschweißt sein.

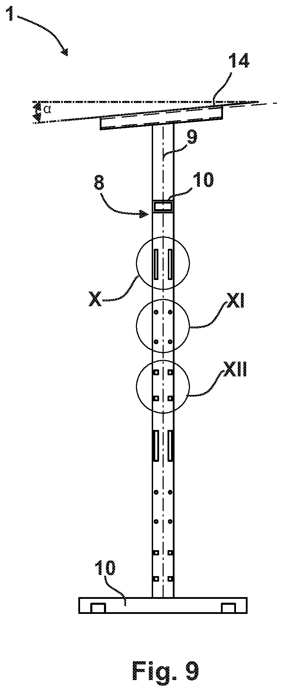

Fig. 9 zeigt ein Trägergestell einer weiteren Ausführungsform einer erfindungsgemäßen Pflanzungsvorrichtung 1 in Seitenansicht, welches im Unterschied zu dem in Fig. 4 dargestellten Trägergestell für eine Anordnung von jeweils zwei Pflanzentrögen 2 auf einer Vertikalposition ausgebildet ist, also für eine bevorzugt beidseitige Zugänglichkeit, wobei Pflanzentröge 2 in zwei Reihen nebeneinander angeordnet sind. Weiter unterscheidet das in Fig. 9 dargestellte Trägergestell von dem in Fig. 4 dargestellten Trägergestell, dass die Steher 8 hier nicht wie bei dem in Fig. 4 dargestellten Trägergestell durch Vierkantprofilrohre 10, sondern durch U-Profile 11 gebildet sind.

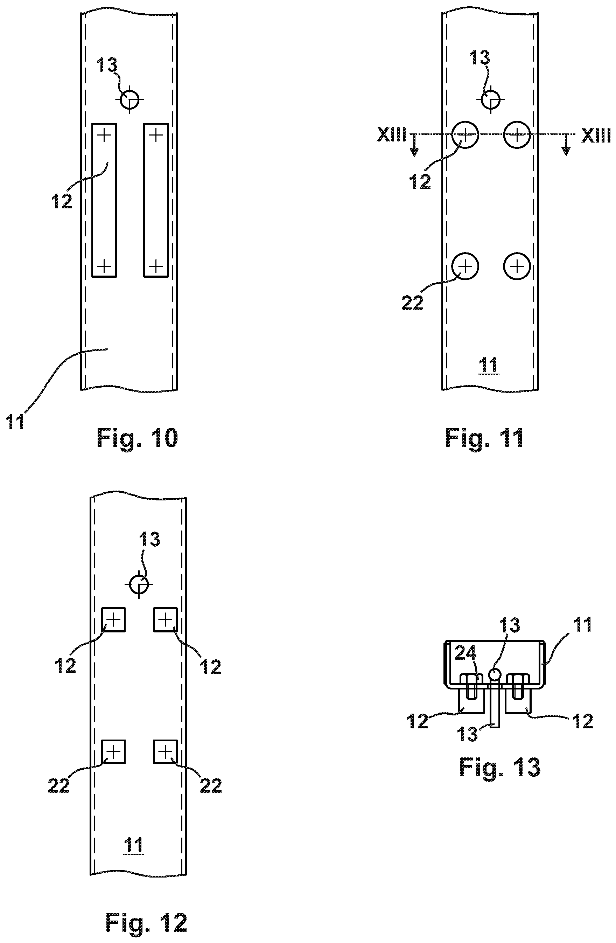

Fig. 10 zeigt das Detail X in Fig. 9, Fig. 11 das Detail XI in Fig. 9 und Fig. 12 das Detail XII in Fig. 9.

Das in den Fig. 9 bis 13 dargestellte Trägergestell ist somit zur Anordnung von sechs Pflanzentrögen 2 übereinander und jeweils zwei Pflanzentrögen 2 nebeneinander, also zur Anordnung von gesamt zwölf Pflanzentrögen 2 ausgebildet, wobei die Einhängeeinrichtung 12 in den Fig. 10 bis 12 wieder beispielhaft als Quadratstahl, als Rundstahl und aus Quadratstahl mit gesonderten Vorsprüngen 22 ausgebildet dargestellt ist.

Es versteht sich, dass üblicherweise an einem Trägergestell die Einhängeeinrichtungen 12 einheitlich ausgebildet sind, beispielsweise immer als Rundstahl oder Quadratstahl.

Weiter ist abweichend von dem in den Fig. 4 bis 9 dargestellten Ausführungsbeispiel hier eine Bewässerungseinrichtung vorgesehen, wobei eine Zuleitung 13 innenliegend in den durch U-Profile 11 gebildeten Stehern 8 des Trägergestelles positioniert ist und durch eine Bohrung in den Stehern 8 zu den einzelnen Pflanzentrögen 2 geführt wird.

Aufgrund des Einsatzes eines U-Profils 11 für die Steher 8 ist es einerseits möglich, eine Zuleitung 13 für die Bewässerung in den Stehern 8 anzuordnen, sodass diese von einem Bereich zwischen den Stehern 8 nicht ersichtlich ist. Andererseits können auch die Einhängeeinrichtungen 12 leicht von einer Außenseite der Steher 8 aus befestigt werden, sodass wie in Fig. 13 ersichtlich Gewinde nicht in den Stehern 8, sondern in den Einhängeeinrichtungen 12 angeordnet sind und Schraubenköpfe von einem Bereich zwischen den Stehern 8 nicht sichtbar sind. Wenn die U-Profile 11, welche die Steher 8 bilden, endseitig abgeschlossen sind, beispielsweise mit einer Abdeckung, sind die Schraubenköpfe sowie die Zuleitung 13 für die Bewässerung gänzlich unsichtbar im Steher 8 verborgen. Eine solche Abdeckung kann grundsätzlich ein Kunststoff oder dergleichen sein. Es kann jedoch auch vorgesehen sein, dass ein weiteres U-Profil 11 über das dargestellte U-Profil 11 gestülpt wird, um dieses abzudecken.

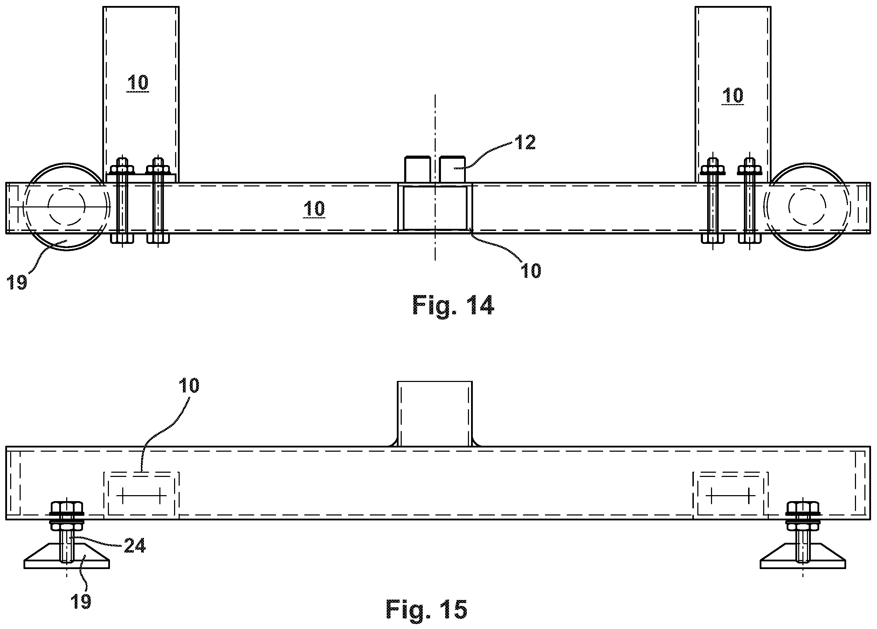

Fig. 14 zeigt eine Draufsicht auf ein Trägergestell einer weiteren Pflanzungsvorrichtung 1. Wie hier ersichtlich ist die Einhängeeinrichtung 12 mit dem Steher 8 verschweißt, sodass ebenfalls keine Schraubenköpfe ersichtlich sind.

Fig. 15 zeigt ein bodenseitiges Detail des entsprechenden Trägergestelles. Hier sind die verstellbaren Fußelemente ersichtlich, mit welchem die Pflanzungsvorrichtung 1 auch bei unebenem oder schrägem Boden 3 horizontal ausgerichtet werden kann. Für eine Verstellung ist eine Schraube 24 vorgesehen, welche mit bodenseitigen Vierkantprofilrohren 10 verbunden ist und über welche das Fußteil 19 mit veränderbarem Vertikalabstand mit dem Trägergestell verbindbar ist.

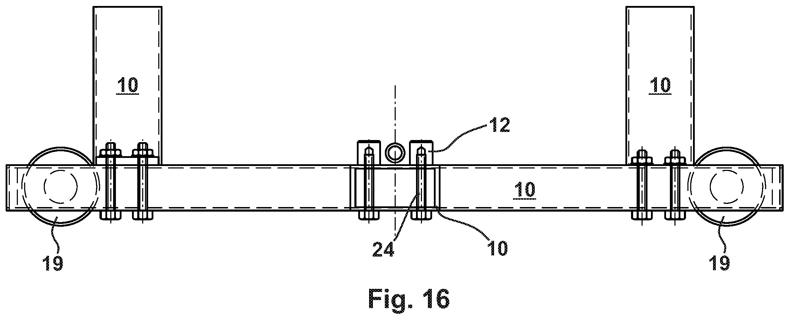

Fig. 16 zeigt eine Draufsicht auf ein Trägergestell einer weiteren erfindungsgemäßen Pflanzungsvorrichtung 1. Hier sind die Einhängeeinrichtungen 12 durch Schraubverbindungen mit den durch Vierkantprofilrohre 10 gebildeten Stehern 8 verbunden, wobei auch hier ein Gewinde in den Einhängeeinrichtungen 12 angeordnet ist, sodass die Schraubenköpfe von einem Bereich zwischen den Stehern 8 nicht sichtbar sind. Eine Zuleitung 13 für eine Bewässerung ist hier zwischen den Einhängeeinrichtungen 12 innenseitig an den Stehern 8 geführt und somit im Unterschied zu dem in Fig. 13 dargestellten Ausführungsbeispiel von einem Bereich zwischen den Stehern 8 aus sichtbar.

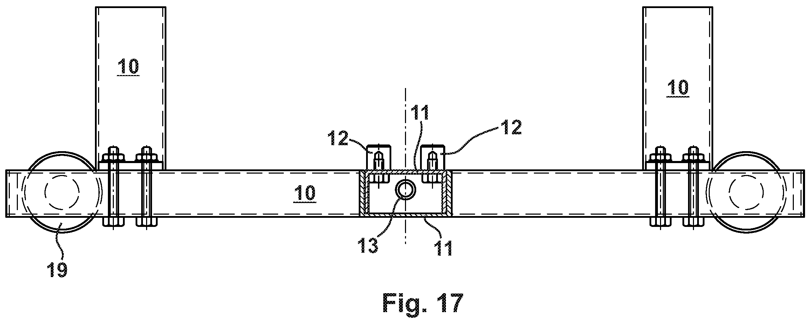

Fig. 17 zeigt eine Draufsicht auf ein weiteres Trägergestell einer erfindungsgemäßen Pflanzungsvorrichtung 1. Hier werden die vertikalen Steher 8, an welchem die Pflanzentröge 2 einhängbar sind, durch zwei U-Profile 11 gebildet, wobei ein U-Profil 11 ein anderes U-Profil 11 abdeckt bzw. ein U-Profil 11 über ein anderes U-Profil 11 gestülpt ist und zwischen den beiden U-Profilen 11 eine Zuleitung 13 für eine Bewässerungseinrichtung angeordnet ist, sodass diese unsichtbar in den Stehern 8 positioniert ist. Die Einhängeeinrichtungen 12 sind hier mit Schrauben 24 befestigt, welche analog zu dem in Fig. 13 dargestellten Ausführungsbeispiel in den Stehern 8 enden. Dies ist auf einfache Weise möglich, zumal für eine Montage bzw. Demontage ein Inneres der Steher 8 leicht zugänglich ist.

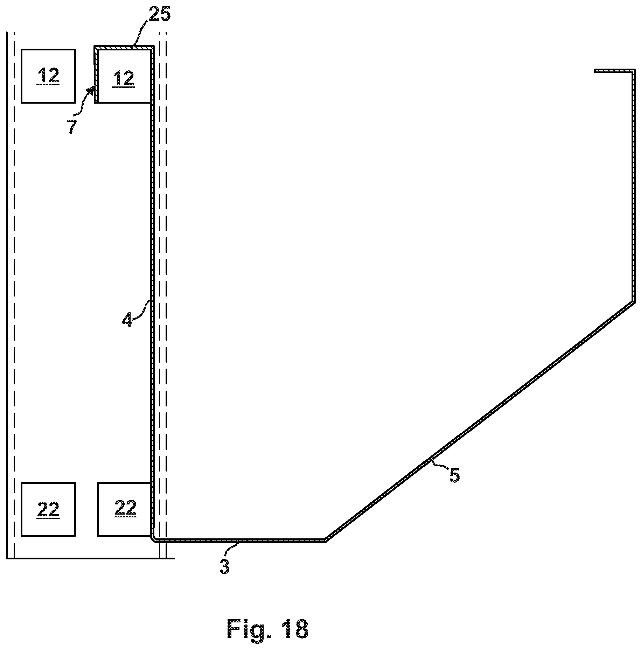

Fig. 18 zeigt einen Schnitt durch einen Pflanzentrog 2 einer erfindungsgemäßen Pflanzungsvorrichtung 1 an einem entsprechenden Steher 8 eines Trägergestelles. Wie ersichtlich weist der Pflanzentrog 2 eine Rückseite 4, einen Boden 3, eine Vorderseite 5 und eine Oberseite 27 auf, wobei die Oberseite 27 im Wesentlichen offen ausgebildet ist, sodass Erde 30 und Pflanzen im Pflanzentrog 2 angeordnet werden können. Die Rückseite 4, der Boden 3 und die Vorderseite 5 werden durch ein einziges Blech 25 gebildet, welches gebogen ist. Anschließend an die Rückseite 4 weist das Blech 25 dabei zwei weitere Kantungen 23 auf, welche ein endseitiges U-Profil 11 bilden, sodass der Pflanzentrog 2 wie dargestellt auf einfache Weise an einer der in den Fig. 4 bis 13 dargestellten Einhängeeinrichtungen 12 befestigt werden kann. Nachdem ein Schwerpunkt des Pflanzentroges 2 horizontal von der Einhängeeinrichtung 12 beabstandet ist, ist wie dargestellt üblicherweise am Trägergestell unter der jeweiligen Einhängeeinrichtung 12 ein Vorsprung 22 angeordnet, an welchem horizontale Kräfte abgestützt werden können.

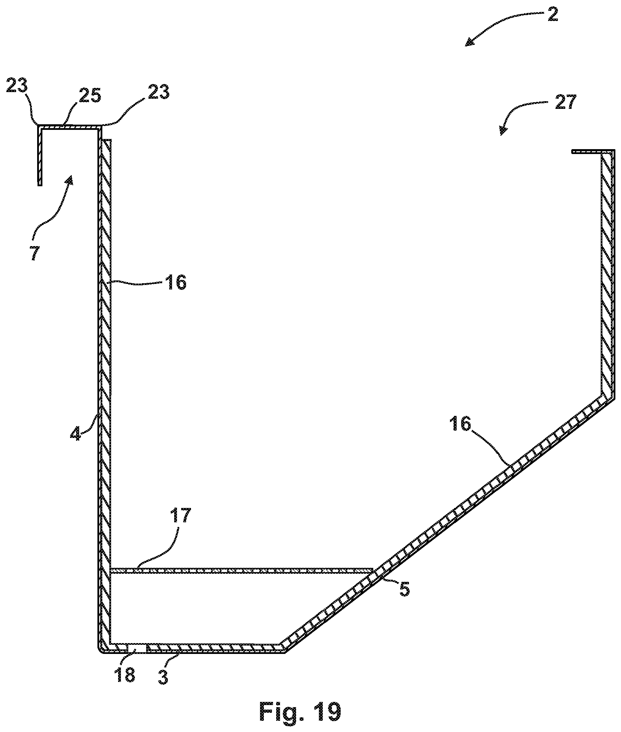

Fig. 19 zeigt eine Ausführungsvariante des entsprechenden Pflanzentroges 2, bei welchem die Rückwand 4, der Boden 3 sowie die Vorderseite 5 und gegebenenfalls auch Seitenwände des Pflanzentroges 2 mit einer Korkmatte 16 versehen sind, welche eine Wärmedämmung bildet. Dadurch können auch bei direkter Sonneneinstrahlung und entsprechender Aufheizung des Bleches 25 in einem Inneren des Pflanzentroges 2 günstige Temperaturverhältnisse erreicht werden. Bodenseitig ist darüber hinaus ein Lochblech 17 mit einem Abstand zum Boden 3 angeordnet, sodass zwischen dem Lochblech 17 und dem Boden 3 ein Raum verbleibt, in welchem Flüssigkeit frei zirkulieren kann, um von einer Erde 30 des Pflanzentroges 2 abgegebene Flüssigkeit leicht sammeln und durch eine bodenseitige Öffnung 18 aus dem Pflanzentrog 2 austragen zu können, in welcher Öffnung 18 auch ein Schlauch 31, insbesondere ein Gummischlauch, angeordnet werden kann. Das Lochblech 17 kann sich über eine gesamte Länge des Pflanzentroges erstrecken oder nur in einem Endbereich angeordnet sein, in welchem bodenseitig im Pflanzentrog eine Öffnung vorgesehen sein kann, um Flüssigkeit aus dem Pflanzentrog austragen zu können.

Auf dem Lochblech 17 wird üblicherweise ein Vlies 28 positioniert, auf welchem beispielsweise Tongranulat angeordnet werden kann, um günstige Eigenschaften für Pflanzen zu gewährleisten. Das Tongranulat kann alternativ oder ergänzend auch unter dem Lochblech 17 angeordnet sein. Wenn sich das Lochblech 17 nicht über eine gesamte Länge des Pflanzentroges 2 erstreckt, kann das Tongranulat auch neben dem Lochblech 17 vorgesehen sein, um bodenseitig ein freies Zirkulieren von Wasser zu ermöglichen.

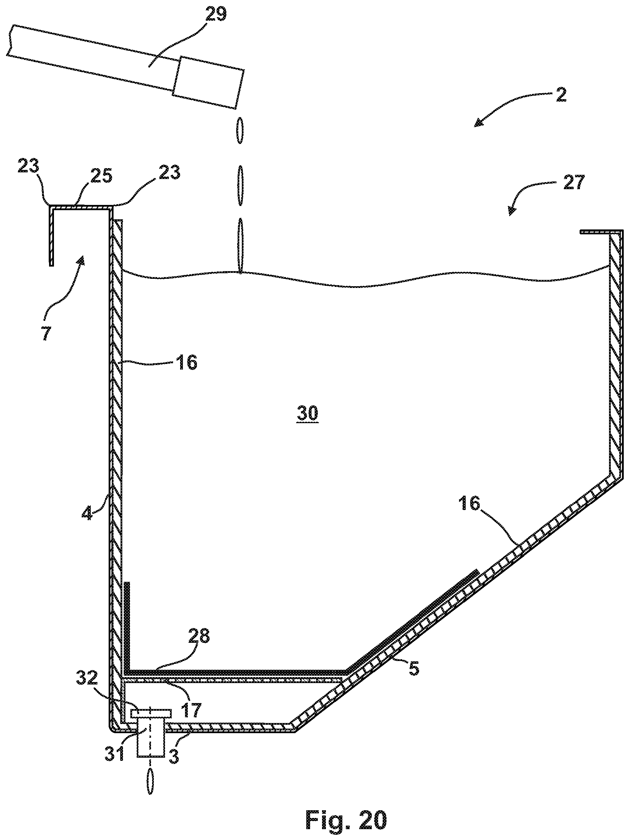

Fig. 20 zeigt einen Pflanzentrog 2 gemäß Fig. 19, wobei jedoch hier auch Erde 30 im Pflanzentrog 2 dargestellt ist. Weiter sind in der in Fig. 20 dargestellten Ausführungsvariante auch ein in der bodenseitigen Öffnung 18 angeordneter Schlauch 31, ein auf dem Lochblech 17 befindliches Vlies 28, welches ein Eindringen der Erde 30 in einen Bereich unter dem Lochblech 17 verhindert, sowie eine Tropfleitung 29 dargestellt, welche mit der hier nicht dargestellten Zuleitung 13 verbunden ist und mit welcher Tropfleitung 29 der Pflanzentrog 2 bewässert werden kann. Das zugeführte Wasser kann den Pflanzentrog 2 durch den in der bodenseitigen Öffnung 18, welche einen Durchmesser von beispielsweise 10 mm bis 15 mm aufweisen kann, angeordneten Schlauch 31 wieder verlassen, welcher Schlauch 31 einen Durchmesser von beispielsweise 14 mm aufweisen kann,. Ein vertikaler Abstand zwischen dem Lochblech 17 und dem Boden 3, in welchem Bereich das Wasser bodenseitig frei zirkulieren kann, beträgt beispielsweise 10 mm bis 20 mm, insbesondere etwa 12 mm. Der Schlauch 31 weist an einem oberen Ende einen Ansatz 32 auf, welcher einen größeren Durchmesser als die Öffnung 18 aufweist, sodass der Schlauch 31 nicht nach unten aus der Öffnung 18 fallen oder gedrückt werden kann. Alternativ zu einem Schlauch 31 kann auch eine entsprechende Kunststoffhülse vorgesehen sein, welche vorzugsweise ebenfalls einen Ansatz 32 aufweist, durch welchen diese formschlüssig in der Öffnung 18 gehalten wird.

Bei einer Bewässerung der Pflanzentröge 2 ist üblicherweise vorgesehen, dass ein Ablauf eines Pflanzentroges 2 für eine Bewässerung eines darunter angeordneten weiteren Pflanzentroges 2 genutzt wird. Unter einem untersten Pflanzentrog 2 ist bevorzugt eine Tasse 20 bzw. eine Abtropftasse angeordnet, welche auf einfache Weise entnommen und entleert werden kann.

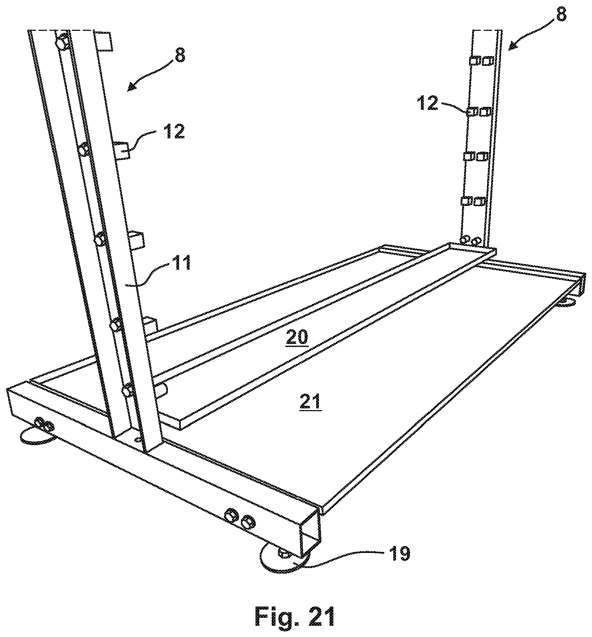

Darüber hinaus kann auch eine bodenseitige Wanne 21 vorgesehen sein, welche allfällige herabfallende Gegenstände wie Blätter und dergleichen auffängt, sodass die Pflanzungsvorrichtung 1 auch in Innenräumen sauber positioniert werden kann. Ein Trägergestell mit einer entsprechenden Tasse 20, welche unterhalb von einem untersten Pflanzentrog 2 angeordnet ist und üblicherweise eine dem Boden 3 des Pflanzentroges 2 entsprechende Größe aufweist, und einer darunter befindlichen Wanne 21 ist in Fig. 21 dargestellt.

Die in den Figuren dargestellten Pflanzungsvorrichtungen 1 weisen eine Länge von etwa 500 mm bis 3.000 mm, üblicherweise 750 mm bis 2.100 mm, auf. Die Pflanzentröge 2 werden bevorzugt mit Längen von 750 mm, 1.000 mm, 1.250 mm, und 1.500 mm ausgebildet, wobei üblicherweise längere Pflanzentröge 2 mit stärkeren Blechen 25 gebildet sind, um eine starke Durchbiegung der Pflanzentröge 2 am Trägergestell zu vermeiden. Die Pflanzungsvorrichtungen 1 werden somit in der Regel mit Stehern 8 mit unterschiedlichen Abständen hergestellt, welche Abständen den Längen entsprechen, in welchen die Pflanzentröge 2 hergestellt werden, sodass Pflanzungsvorrichtungen 1 beispielsweise in den Längen kurz, mit 750 mm horizontalem Abstand zwischen den Stehern 8 , mittel, mit 1.000 mm horizontalem Abstand zwischen den Stehern 8, lang, mit 1.250 mm horizontalem Abstand zwischen den Stehern 8, und sehr lang, mit 1.500 mm horizontalem Abstand zwischen den Stehern 8, und Pflanzentrögen 2 entsprechender Länge in Verkehr gebracht werden können, um eine modulare Bauweise mit gleichzeitig hohem Gleichteilgrad zu erreichen.

Eine erfindungsgemäße Pflanzungsvorrichtung 1 gewährleistet einerseits einen einfachen Aufbau und andererseits eine hohe Standzeit, zumal aufgrund der robusten Konstruktion, wonach die Pflanzentröge 2 durch ein teilweise umlaufendes Blech 25 gebildet werden, eine Langlebigkeit bei Einsatz sowohl in Innenräumen als auch in einem Außenbereich gewährleistet ist. Durch die Möglichkeit, die Pflanzentröge 2 zu bewässern, was beispielsweise auch mit einer Zeitschaltuhr automatisiert erfolgen kann, kann die Pflanzungsvorrichtung 1 auch zum Züchten von Pflanzen verwendet werden, wenn beispielsweise ein regelmäßiges Gießen nicht gewährleistet werden kann.

Weiter ist aufgrund der lösbaren formschlüssigen Verbindung zwischen den Pflanzentrögen und dem Trägergestell eine einfache Montage bzw. Demontage sowie ein Austausch von Pflanzentrögen möglich, beispielsweise um diese zu befüllen bzw. zu entleeren, die Pflanzungsvorrichtung an einen anderen Ort zu bewegen oder eine Höhenposition einzelner Pflanzentröge zu verändern.

## Patentansprüche

1. Pflanzungsvorrichtung (1), aufweisend ein Trägergestell sowie zumindest zwei Pflanzentröge (2), welche jeweils eine Vorderseite (5), einen Boden (3), eine Rückseite (4) und Seitenflächen (6) aufweisen und an unterschiedlichen Vertikalpositionen mit dem Trägergestell lösbar verbindbar sind, wobei jeder Pflanzentrog (2) ein mehrfach gekantetes Blech (25) aufweist, welches die Vorderseite (5), den Boden (3) und die Rückseite (4) des Pflanzentroges (2) bildet, wobei das Blech (25) anschließend an die Rückseite (4) ein Einhängeprofil (7) bildet, welches als U-Profil, vorzugsweise durch zwei an die Rückseite (4) anschließende Kantungen (23) ausgebildet ist, wobei am Trägergestell zu jedem Pflanzentrog (2) mit dem Einhängeprofil (7) korrespondierende Einhängeeinrichtungen (12) angeordnet sind, sodass die Pflanzentröge (2) über die Einhängeprofile (7) mit dem Trägergestell formschlüssig lösbar verbindbar sind, **dadurch gekennzeichnet, dass** am Trägergestell zu jedem Pflanzentrog (2) zugeordnet jeweils unter der Einhängeeinrichtung (12) ein Vorsprung (22) vorgesehen ist, wobei ein Pflanzentrog (2) derart am Trägergestell anordenbar ist, dass der Pflanzentrog (2) über das U-Profil an der Einhängeeinrichtung (12) eingehängt ist und eine Rückseite (4) des Pflanzentroges (2) an dem unter der Einhängeeinrichtung (12) angeordneten Vorsprung (22) anliegt.

2. Pflanzungsvorrichtung (1) nach Anspruch 1, **dadurch gekennzeichnet, dass** das Trägergestell zwei Steher (8) aufweist, an welchen die Einhängeeinrichtungen (12) angeordnet sind, wobei Längsachsen (9) der Steher (8) bevorzugt etwa vertikal ausgerichtet sind.

3. Pflanzungsvorrichtung (1) nach Anspruch 2, **dadurch gekennzeichnet, dass** die Steher (8) Profilrohre, insbesondere Vierkantprofilrohre (10), aufweisen oder aus solchen Profilrohren bestehen, wobei die Steher (8) bevorzugt durch ein oder mehrere horizontal angeordnete Profilrohre verbunden sind.

4. Pflanzungsvorrichtung (1) nach Anspruch 3, **dadurch gekennzeichnet, dass** die Steher (8) U-Profile (11) aufweisen oder durch U-Profile (11) gebildet werden, wobei bevorzugt ein erstes U-Profil (11) über ein zweites U-Profil (11) gestülpt ist.

5. Pflanzungsvorrichtung (1) nach einem der Ansprüche 1 bis 4, **dadurch gekennzeichnet, dass** zumindest eine Einhängeeinrichtung (12) durch ein Vierkantprofil, insbesondere eine Vierkantstange, gebildet ist, wobei die Einhängeeinrichtung (12) mit dem Trägergestell durch eine Schraub- und/oder Schweißverbindung verbunden ist.

6. Pflanzungsvorrichtung (1) nach einem der Ansprüche 1 bis 5, **dadurch gekennzeichnet, dass** eine Bewässerungseinrichtung vorgesehen ist, durch welche die einzelnen Pflanzentröge (2) mit Wasser versorgbar sind, wobei bevorzugt vorgesehen ist, dass eine Zuleitung (13), über welche Wasser den einzelnen Pflanzentrögen (2) zuführbar ist, im Trägergestell, insbesondere in Stehern (8) des Trägergestelles, angeordnet ist.

7. Pflanzungsvorrichtung (1) nach Anspruch 6, **dadurch gekennzeichnet, dass** eine mit einer Wasserleitung verbindbare Zuleitung (13) und eine Zeitschaltuhr vorgesehen sind, sodass die Pflanzentröge (2) automatisiert bewässerbar sind.

8. Pflanzungsvorrichtung (1) nach einem der Ansprüche 1 bis 7, **dadurch gekennzeichnet, dass** zur Aufnahme von aus den Pflanzentrögen (2) austretender Flüssigkeit unter einem untersten Pflanzentrog (2) eine Tasse (20) vorgesehen ist, welche bevorzugt aus einem Blech (25), insbesondere aus einem aus einem rostfreien Stahl bestehenden Blech (25), gebildet ist.

9. Pflanzungsvorrichtung (1) nach einem der Ansprüche 1 bis 8, **dadurch gekennzeichnet, dass** bodenseitig am Trägergestell eine Wanne (21) vorgesehen ist, welche vorzugsweise eine einer Grundfläche der Pflanzungsvorrichtung (1) entsprechende Größe aufweist.

10. Pflanzungsvorrichtung (1) nach einem der Ansprüche 1 bis 9, **dadurch gekennzeichnet, dass** am Trägergestell ein Dach (14) angeordnet ist, welches die Pflanzentröge (2) seitlich überragt, wobei das Dach (14) bevorzugt ein Glas, insbesondere ein Sicherheitsglas, aufweist oder aus einem solchen Glas besteht.

11. Pflanzungsvorrichtung (1) nach Anspruch 10, **dadurch gekennzeichnet, dass** das Dach (14) geneigt angeordnet ist, insbesondere unter einem Winkel (α) zu einer Horizontalen von 2 Grad bis 30 Grad, vorzugsweise 5 Grad bis 15 Grad.

12. Pflanzungsvorrichtung (1) nach einem der Ansprüche 1 bis 11, **dadurch gekennzeichnet, dass** zumindest an einem Pflanzentrog (2) an der Vorderseite (5), dem Boden (3) und/oder der Rückseite (4) innenseitig eine Korkmatte (16) angeordnet ist, wobei die Korkmatte (16) bevorzugt eine Dicke von 1 mm bis 15 mm, vorzugsweise 2 mm bis 5 mm, aufweist.

13. Pflanzungsvorrichtung (1) nach einem der Ansprüche 1 bis 12, **dadurch gekennzeichnet, dass** innen an zumindest einem Pflanzentrog (2) bodenseitig ein Lochblech (17) vorgesehen ist, auf welchem ein Vlies (28) angeordnet ist.

14. Pflanzungsvorrichtung (1) nach einem der Ansprüche 1 bis 13, **dadurch gekennzeichnet, dass** zumindest ein Pflanzentrog (2) einen zu einem vorderen Ende zulaufenden Querschnitt aufweist.

15. Pflanzungsvorrichtung (1) nach einem der Ansprüche 1 bis 14, **dadurch gekennzeichnet, dass** das Trägergerüst zur Aufnahme von zumindest zwei Pflanzentrögen (2) auf derselben Vertikalposition ausgebildet ist, vorzugsweise zur Aufnahme von an einer Vorderseite (5) und einer Rückseite (4) angeordneten und vertikal beabstandeten Pflanzentrögen (2).

## Claims

1. Planting device (1) having a support frame and at least two plant troughs (2), which respectively have a front side (5), a bottom (3), a rear side (4), and lateral sides (6), and can be detachably connected to the support frame at differing vertical positions, wherein each plant trough (2) has a multiply-folded metal sheet (25) which forms the front side (5), the bottom (3), and the rear side (4) of the plant trough (2), wherein, subsequent to the rear side (4), the metal sheet (25) forms a suspension profile (7) which is designed as a U-profile, preferably by two folds (23) subsequent to the rear side (4), wherein suspension devices (12) corresponding to the suspension profile (7) are arranged on the support frame for each plant trough (2) so that the plant troughs (2) can be detachably connected in a form-fitting way to the support frame via the suspension profile (7), **characterized in that** a projection (22) is provided under each suspension device (12) respectively assigned to each plant trough (2) on the support frame, wherein a plant trough (2) can be arranged on the support frame in such a way that the plant trough (2) is suspended on the suspension device (12) via the U-profile, and a rear side (4) of the plant trough (2) contacts the projection (22) arranged under the suspension device (12).

2. Planting device (1) according to claim 1, **characterized in that** the support frame has two uprights (8) on which the suspension devices (12) are arranged, wherein the longitudinal axes (9) of the uprights (8) are preferably aligned approximately vertically.

3. Planting device (1) according to claim 2, **characterized in that** the uprights (8) have profile tubes, in particular square profile tubes (10), or consist of such profile tubes, wherein the uprights (8) are preferably connected by one or more horizontally-arranged profile tubes.

4. Planting device (1) according to claim 3, **characterized in that** the uprights (8) have U-profiles (11) or are formed by U-profiles (11), wherein a first U-profile (11) is preferably placed over a second U-profile (11).

5. Planting device (1) according to one of claims 1 to 4, **characterized in that** at least one suspension device (12) is formed by a square profile, in particular a square rod, wherein the suspension device (12) is connected to the support frame by a screw connection and/or by a welded joint.

6. Planting device (1) according to one of claims 1 to 5, **characterized in that** an irrigation device is provided, through which the individual plant troughs (2) can be supplied with water, wherein it is preferably provided that a supply line (13), via which water can be supplied to the individual plant troughs (2), is arranged in the support frame, in particular in uprights (8) of the support frame.

7. Planting device (1) according to claim 6, **characterized in that** a supply line (13), which can be connected to a water pipe, and a timer are provided, so that the plant troughs (2) can be irrigated automatically.

8. Planting device (1) according to one of claims 1 to 7, **characterized in that** a cup (20) is provided under a lowermost plant trough (2) for receiving liquid leaking from the plant troughs (2), said cup is preferably made from a metal sheet (25), in particular from a metal sheet (25) made of stainless steel.

9. Planting device (1) according to one of claims 1 to 8, **characterized in that** a tray (21) is provided on the bottom on the support frame, which preferably has a size corresponding to a base area of the planting device (1).

10. Planting device (1) according to one of claims 1 to 9, **characterized in that** a roof (14) is arranged on the support frame, said roof projects laterally beyond the plant troughs (2), wherein the roof (14) has glass, in particular safety glass, or consists of such glass.

11. Planting device (1) according to claim 10, **characterized in that** the roof (14) is arranged at an inclination, in particular at an angle (α) to a horizontal of 2 degrees to 30 degrees, preferably 5 degrees to 15 degrees.

12. Planting device (1) according to one of claims 1 to 11, **characterized in that** at least one cork mat (16) is arranged on the inside of a plant trough (2) on the front side (5), the bottom (3), and/or on the rear side (4), wherein the cork mat (16) preferably has a thickness of 1 mm to 15 mm, preferably 2 mm to 5 mm.

13. Planting device (1) according to one of claims 1 to 12, **characterized in that** a perforated plate (17), on which a fleece (28) is arranged, is provided on the inside on the bottom side of at least one plant trough (2).

14. Planting device (1) according to one of claims 1 to 13, **characterized in that** at least one plant trough (2) has a cross section tapering to a front end.

15. Planting device (1) according to one of claims 1 to 14, **characterized in that** the support frame is designed for receiving at least two plant troughs (2) at the same vertical position, preferably for receiving plant troughs (2) arranged on a front side (5) and on a rear side (4) and spaced vertically apart.

## Revendications

1. Dispositif de plantation (1), comportant un châssis de support, ainsi qu'au moins deux bacs à plantes (2), lesquels comportent chacun une face avant (5), un fond inférieur (3), une face arrière (4) et des surfaces latérales (6) et sont susceptibles d'être assemblés de manière amovible dans différentes positions verticales avec le châssis de support, chaque bac à plantes (2) comportant une tôle (25) à arêtes multiples, laquelle constitue la face avant (5), le fond inférieur (3) et la face arrière (4) du bac à plantes (2), la tôle (25) constituant dans la suite sur la face arrière (4) un profilé d'accrochage (7), lequel est conçu sous la forme d'un profilé en U, de préférence par deux arêtes (23) se raccordant sur la face arrière (4), sur le châssis de support étant placés des systèmes d'accrochage (12), correspondant par le profilé d'accrochage (7) à chaque bac à plantes (2), de telle sorte que le bacs à plantes (2) soit susceptible d'être assemblé de manière amovible, par complémentarité de forme avec le châssis de support, par l'intermédiaire des profilés d'accrochage (7), **caractérisé en ce que** sur le châssis de support est prévu en association à chaque bac à plantes (2), chaque fois sur le système d'accrochage (12) une saillie (22), un bac à plantes (2) pouvant se placer sur le châssis de support de telle sorte que le bac à plantes (2) soit accroché au système d'accrochage (12) par l'intermédiaire du profilé en U et qu'une face arrière (4) du bac à plantes (2) soit adjacente à la saillie (22) placée sous le système d'accrochage (12).

2. Dispositif de plantation (1) selon la revendication 1, **caractérisé en ce que** le châssis de support comporte deux montants (8) sur lesquels sont placés les systèmes d'accrochage (12), des axes longitudinaux (9) des montants (8) étant orientés de manière préférentielle approximativement à la verticale.

3. Dispositif de plantation (1) selon la revendication 2, **caractérisé en ce que** les montants (8) comportent des tubes profilés, de préférence des tubes profilés carrés (10), ou sont constitués de tels tubes profilés, les montants (8) étant assemblés de manière préférentielle par un ou plusieurs tubes profilés placés à l'horizontale.

4. Dispositif de plantation (1) selon la revendication 3, **caractérisé en ce que** les montants (8) comportent des profilés en U (11) ou sont constitués de profilés en U (11), de manière préférentielle, un premier profilé en U (11) étant retourné par-dessus un deuxième profilé en U (11).

5. Dispositif de plantation (1) selon l'une quelconque des revendications 1 à 4, **caractérisé en ce qu'**au moins un système d'accrochage (12) est constitué par un profilé carré, notamment par une barre carrée, le système d'accrochage (12) étant assemblé avec le châssis de support par un assemblage vissé et / ou soudé.

6. Dispositif de plantation (1) selon l'une quelconque des revendications 1 à 5, **caractérisé en ce qu'**il est prévu un système d'irrigation, permettant d'alimenter en eau les bacs à plantes (2) individuels, étant prévu de manière préférentielle qu'une conduite d'alimentation (13), par l'intermédiaire de laquelle de l'eau peut être alimentée vers les bacs à plantes individuels (2) soit placée dans le châssis de support, notamment dans des montants (8) du châssis de support.

7. Dispositif de plantation (1) selon la revendication 6, **caractérisé en ce qu'**il est prévu une conduite d'alimentation (13) raccordable sur une conduite d'eau et une minuterie, de sorte que l'irrigation des bacs à plantes (2) puisse se faire de manière automatisée.

8. Dispositif de plantation (1) selon l'une quelconque des revendications 1 à 7, **caractérisé en ce que** pour recevoir du liquide s'échappant des bacs à plantes (2), sous un bac à plantes (2) placé le plus bas est prévue une tasse (20), laquelle est constituée de préférence d'une tôle (25), notamment d'une tôle (25) en acier inoxydable.

9. Dispositif de plantation (1) selon l'une quelconque des revendications 1 à 8, **caractérisé en ce que** du côté du fond inférieur, il est prévu sur le châssis de support une cuve (21), laquelle présente de préférence une taille correspondant à une surface de base du dispositif de plantation (1).

10. Dispositif de plantation (1) selon l'une quelconque des revendications 1 à 9, **caractérisé en ce que** sur le châssis de support est placé un toit (14), lequel saillit latéralement par-dessus les bacs à plantes (2), le toit (14) comportant de manière préférentielle un verre, notamment un verre de sécurité ou étant constitué d'un tel verre.

11. Dispositif de plantation (1) selon la revendication 10, **caractérisé en ce que** le toit (14) est placé en inclinaison, notamment sous un angle (α) de 2 degrés à 30 degrés, de préférence de 5 degrés à 15 degrés par rapport à une horizontale.

12. Dispositif de plantation (1) selon l'une quelconque des revendications 1 à 11, **caractérisé en ce qu'**au moins sur un bac à plantes (2) est placée côté intérieur sur la face avant (5), sur le fond inférieur (3) et / ou sur la face arrière (4) une natte en liège (16), la natte en liège (16) présentant de manière préférentielle une épaisseur de 1 mm à 15 mm, de préférence de 2 mm à 5 mm.

13. Dispositif de plantation (1) selon l'une quelconque des revendications 1 à 12, **caractérisé en ce qu'**à l'intérieur sur au moins un bac à plantes (2) est prévue du côté fond inférieur une tôle perforée (17), sur laquelle est placé un non-tissé (28).

14. Dispositif de plantation (1) selon l'une quelconque des revendications 1 à 13, **caractérisé en ce qu'**au moins un bac à plantes (2) présente une section transversale convergeant vers une extrémité avant.

15. Dispositif de plantation (1) selon l'une quelconque des revendications 1 à 14, **caractérisé en ce que** le châssis de support est conçu pour recevoir au moins deux bacs à plantes (2) sur la même position verticale, de préférence pour recevoir des bacs à plantes (2) placés sur une face avant (5) et sur une face arrière (4) et écartés à la verticale.
